**Europäisches Patentamt**

**European Patent Office**

**Office européen des brevets**

(19)

(11) Numéro de publication : **0 490 713 A1**

## (12) DEMANDE DE BREVET EUROPEEN

(21) Numéro de dépôt : **91402949.1**

(22) Date de dépôt : **05.11.91**

(51) Int. Cl.$^5$ : **G01S 7/02**

(30) Priorité : **09.11.90 FR 9013940**

(43) Date de publication de la demande :
**17.06.92 Bulletin 92/25**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Gandar, Olivier**
**THOMSON-CSF, SCPI, Cédex 67**
**F-92045 Paris la Défense (FR)**
Inventeur : **Vasseur, Franck**
**THOMSON-CSF, SCPI, Cédex 67**
**F-92045 Paris la Défense (FR)**

(74) Mandataire : **Benoit, Monique et al**
**THOMSON-CSF SCPI**
**F-92045 PARIS LA DEFENSE CEDEX 67 (FR)**

(54) **Procédé de reconnaissance d'une cible aérienne à partir de son écho radar.**

(57) Ce procédé comprend les étapes consistant à : (a) produire une émission radar Doppler en direction de la cible ; (b) déterminer le peigne de raies formant le spectre Doppler du signal reçu en retour ; (c) rechercher, au centre de ce peigne, une raie principale (1) correspondant à la vitesse propre (VR) de déplacement de l'aéronef ; (d) déterminer l'écart (DVR) entre cette raie principale et la raie secondaire du premier ordre (2) du peigne ; et (e) à partir de cette valeur d'écart et de la configuration relative des raies du peigne, classer la cible dans une catégorie de cible prédéterminée.

À l'étape (e), on peut notamment déterminer au moins un paramètre intrinsèque du spectre (nombre des raies secondaires, intensité relative des raies secondaires par rapport à la raie principale, intensité absolue pondérée par la distance de la cible de ces raies secondaires, surface équivalente radar de la cible), et effectuer à partir de ces paramètres intrinsèques une détermination préalable d'un type de cible parmi plusieurs types prédéterminés.

On peut également comparer le peigne de raies à une pluralité de peignes de référence préalablement établis et mémorisés dans une bibliothèque de peignes correspondant à des cibles connues, et sélectionner celui de ces peignes de référence présentant le plus fort degré d'intercorrélation avec le peigne de raies du signal reçu.

FIG.2

EP 0 490 713 A1

La présente invention concerne un procédé de reconnaissance d'une cible aérienne à partir de son écho radar.

La présente invention s'applique en particulier à la reconnaissance de cibles aériennes depuis un radar aéroporté, par exemple lorsqu'un pilote d'avion de chasse souhaite savoir, avant de pouvoir avoir un contact visuel avec celle-ci, à quel type de cible il a affaire (avion de ligne, avion à hélice, avion d'arme, etc.) et si possible non seulement le type général de cible, mais également, pour un même type, à quelle catégorie de cible ou modèle d'appareil cette cible correspond (par exemple, pour une cible du type avion de ligne, savoir s'il s'agit d'un Airbus, d'un DC-10, etc.).

Cette application à la reconnaissance de cibles depuis un radar aéroporté n'est cependant pas limitative de la présente invention, et l'on pourrait aussi bien appliquer celle-ci par exemple à la reconnaissance de cibles depuis un radar terrestre ou naval, dès lors que ce radar permet, comme on le verra plus loin, une acquisition en mode Doppler.

Jusqu'à présent, lorsqu'un appareil pénètre l'espace aérien couvert par un radar, les seuls moyens permettant de savoir ce qu'il est sont la liaison radio ou la réponse à un signal d'identification IFF (*Identification Friend or Foe* : identification ami ou ennemi), si l'on a affaire à un avion coopératif.

En revanche, il n'existe aucun moyen, lorsque la cible ne répond pas aux signaux d'interrogation radio ou IFF et qu'elle est hors de portée visuelle, de savoir s'il s'agit ou non d'une cible hostile, ou même éventuellement s'il s'agit ou non d'un appareil réel mais d'une contremesure électronique destinée à leurrer ou à brouiller le radar.

Seule l'identification visuelle peut alors être utilisée, ce qui présuppose à la fois une distance très réduite, donc une identification tardive, et bien entendu de bonnes conditions de visibilité.

Le but de la présente invention est de proposer un procédé de reconnaissance de cibles qui permette au pilote, lorsqu'une cible se présente dans le champ de son radar, de connaître non seulement la position de celle-ci (paramètre qui était jusqu'à présent, avec éventuellement la vitesse, la seule information délivrée en l'absence de réponse à un signal d'interrogation IFF), mais aussi de connaître également le type d'avion correspondant à intercepter ou, à tout le moins, de lui indiquer un degré de danger à l'égard de cette cible (un avion de ligne étant a priori une cible moins dangereuse qu'un avion d'arme à réacteur).

Un autre but de l'invention est de proposer un procédé de reconnaissance de cibles qui, en outre, permette au pilote de disposer d'un moyen d'alerte destiné à déclencher des dispositifs CCME (de Contre-ContreMesures Électroniques) lorsque l'écho de la cible fait apparaître des modifications représentatives non d'un appareil, mais d'un brouilleur en cours de déclenchement.

La présente invention permet également, lorsque le radar opère en mode PSM (Poursuite Sur Information Discontinue, correspondant à une phase de recherche où le radar ne passe sur la cible que de façon échantillonnée) puis en mode PSIC (Poursuite Sur Information Continue), lorsque le radar est pointé sur la cible en permanence, de vérifier que lors de la transition de PSID en PSIC, la poursuite continue s'effectue bien sur la même cible que celle que l'on avait repérée et poursuivie lors de la phase PSID, ou bien si, au contraire, il y a eu lors de la transition transfert inopiné de la poursuite sur une autre cible, située au voisinage de la première, et qui n'est pas la cible que l'on souhaitait intercepter.

Ces différents buts sont atteints, selon l'invention, par un procédé comprenant les étapes consistant à:

(a) produire une émission radar Doppler en direction de la cible,

(b) déterminer le peigne-de-raies formant le spectre Doppler du signal reçu en retour,

(c) rechercher, au centre de ce peigne, une raie principale correspondant à la vitesse propre de déplacement de l'aéronef,

(d) déterminer l'écart entre cette raie principale et la raie secondaire du premier ordre du peigne, et

(e) à partir de cette valeur d'écart et de la configuration relative des raies du peigne, classer la cible dans une catégorie de cible prédéterminée.

Dans une première forme de mise en oeuvre du procédé de l'invention, à l'étape (e) de classification de la cible, on détermine au moins un paramètre intrinsèque du spectre, et on effectue à partir de ces paramètres intrinsèques une détermination préalable d'un type de cible parmi plusieurs types prédéterminés.

Ces paramètres intrinsèques peuvent notamment comprendre le nombre des raies secondaires du peigne, l'intensité relative des raies secondaires du peigne par rapport à la raie principale, ou encore l'intensité absolue, pondérée par la distance de la cible, des raies secondaires du peigne.

On peut également utiliser comme paramètre de détermination, dans l'étape (e) de classification de la cible, la surface équivalente radar de la cible.

Dans une seconde forme de mise en oeuvre du procédé de l'invention, qui peut être utilisée aussi bien en variante qu'en complément de la première, à l'étape (e) de classification de la cible, on compare ledit peigne de raies formant le spectre Doppler du signal reçu en retour à une pluralité de peignes de référence préalablement établis et mémorisés dans une bibliothèque de peignes correspondant à des cibles connues, et on sélectionne celui de ces peignes de référence présentant le plus fort degré d'intercorrélation avec le peigne de raies formant le spectre Doppler du signal reçu.

Par ailleurs, l'étape (d) de détermination de l'écart entre la raie centrale et la raie du premier ordre du peigne peut avantageusement comprendre une étape de filtrage des échantillons Doppler ne conservant que les échantillons produisant des sauts de fréquence non inférieurs au double de l'écart moyen constaté sur les échantillons précédents, et/ou ne conservant les échantillons que lorsque le nombre de raies constaté est au moins égal à trois.

On peut en outre prévoir une étape complémentaire de détection d'une modification de la classification de la cible établie à l'étape (e), et de déclenchement d'une alerte de contre-contre-mesures-électroniques en cas de telle modification constatée.

De façon comparable, lorsque le procédé est mis en oeuvre au cours d'une procédure avec transition de poursuite sur information discontinue en poursuite sur information continue, on peut avantageusement prévoir une étape complémentaire de comparaison des classifications de cible établies à l'étape (e), respectivement, avant et après ladite transition, et, au cas où cette comparaison est négative, de déclenchement d'une alerte signalant un transfert de la poursuite sur une autre cible.

On va maintenant donner une description détaillée de la présente invention, en référence aux fibres annexées.

La figure 1 montre un exemple de spectre Doppler simple, correspondant typiquement à une cible à moteur unique.

La figure 2 montre un exemple de spectre Doppler complexe, correspondant typiquement à une cible à plusieurs moteurs, engendrant de ce fait des raies d'intermodulation.

Le procédé de l'invention utilise le spectre de fréquences produit à partir de l'écho reçu du signal émis par un radar Doppler.

On sait qu'un radar Doppler travaille dans le domaine spectral, la donnée de base étant la fréquence Doppler de la cible, correspondant à une vitesse relative de déplacement (ci-après désignée VR) par rapport à la source du signal radar.

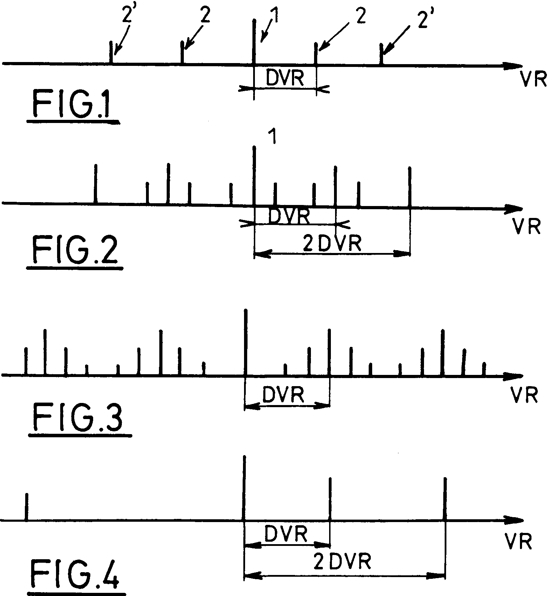

A un instant donné (on suppose que l'on travaille en mode échantillonné), le spectre Doppler présente une raie principale 1, illustrée sur la figure 1, correspondant à la vitesse instantanée relative de déplacement de la cible, dans la direction du radar, à l'instant où celle-ci réfléchit le signal radar.

En réalité, le spectre reçu comporte également des raies secondaires telles que 2 et 2', disposées symétriquement par rapport à la raie principale 1. On recueille ainsi, outre la raie principale 1, une raie du premier ordre, référencée 2, une raie du second ordre, référencée 2', etc., ces différentes raies étant toutes séparées par un écart DVR constant (en pratique, on peut acquérir en vue de l'analyse du spectre des raies jusqu'au dixième ordre, et même plus, soit un total de vingt raies secondaires et plus).

Ces raies secondaires 2, 2', ... sont principalement dues aux aubes des compresseurs des réacteurs de la cible, et sont donc propres à celle-ci. Cette cause (moteurs), bien que prédominante, n'est cependant pas la seule, et il existe d'autres phénomènes, tels que notamment des vibrations de la structure, produisant également des raies secondaires.

En cas de cible à plusieurs moteurs, on peut par ailleurs trouver, comme illustré figure 2, d'autres raies de plus faible amplitude, telles que 3', correspondant à des intermodulations entre les raies secondaires des divers moteurs de la cible.

L'idée de base de l'invention est d'exploiter les caractéristiques spectrales liées à chaque cible pour classer celle-ci parmi différents types (avion de ligne, avion d'arme, etc.) et, à l'intérieur de chaque type, parmi différentes catégories d'appareils.

En effet - et cette constatation est à la base de l'invention - on constate que, pour un même type et une même catégorie d'appareil, au cours d'une interception l'écart DVR entre la raie principale et les premières raies secondaires est un paramètre qui a tendance à se conserver. On constate même que, sur plusieurs vols, le peigne de raies est sensiblement identique pour une même cible.

Tout d'abord, il est possible d'effectuer une première détermination grossière du type de cible à partir des seules caractéristiques intrinsèques du spectre reçu, notamment à partir des paramètres suivants :

– le nombre de raies secondaires du peigne (raies secondaires des moteurs et raies d'intermodulation) : un spectre riche est en effet révélateur d'un appareil à plusieurs moteurs, qui pourra donc être vraisemblablement un avion de ligne;

– les niveaux absolus (pondérés bien entendu par la distance de la cible) des raies secondaires du peigne, c'est-à-dire des niveaux de ces raies par rapport au bruit thermique : un niveau élevé sera en effet révélateur d'un moteur très apparent (comme sur les avions de ligne tels que les Airbus), tandis qu'un faible niveau sera au contraire révélateur d'un moteur caréné ;

– l'intensité relative des raies secondaires du peigne par rapport à la raie principale, c'est-à-dire en d'autres termes le « contraste » entre ces raies secondaires et la raie principale : ainsi, un moteur caréné produit un spectre beaucoup moins contrasté qu'un moteur très apparent;

– la surface équivalente radar (SER), qui pourra être préalablement calculée d'après la relation classique :

$$10 \log (SER) = S/B + 40 \log (d) - Y,$$

S/B étant le rapport signal/bruit exprimé en décibels, d étant la distance du radar à la cible et Y étant une constante représentative du bilan de puissance du radar, intégrant donc divers facteurs tels que puissance d'émission, gain d'antenne, etc.

On pourra ainsi, pour un spectre reçu, extraire de celui-ci ses différents paramètres (paramètres intrinsèques) et les recouper afin de procéder à une première détermination préalable, grossière, du type de cible parmi plusieurs types prédéterminés.

On pourra ensuite procéder à une détermination fine, à l'intérieur de ce type de cible, de la catégorie de cible, en effectuant par intercorrélation un rapprochement entre une pluralité de peignes de référence (peigne tel qu'illustré figure 3) et le peigne du signal reçu (tel qu'illustré figure 4).

Les divers peignes de référence auront été préalablement déterminés en relevant, pour chacun, la signature spectrale d'une cible connue à partir d'enregistrements effectués en vol, afin d'établir ainsi une bibliothèque de « signatures » ou peignes de référence servant de base de comparaison et d'évaluation.

Lors de l'interception, on compare la signature de la cible à étudier aux différentes signatures de cette bibliothèque, afin de déterminer celle qui donnera le degré d'intercorrélation le plus élevé, correspondant à la catégorie de cible la plus probable.

La première étape de ce processus consiste à déterminer la raie la plus forte du spectre reçu, que l'on supposera être celle correspondant à la raie principale.

On détermine ensuite l'écart DVR entre cette raie principale et la première raie secondaire.

Cette étape peut présenter certaines difficultés dans la mesure où, après la raie principale, ce n'est pas toujours la raie secondaire du premier ordre qui apparaît la première, mais quelquefois les raies du second ordre, ou même du troisième ordre, de sorte que le paramètre DVR calculé sera alors en fait le double ou le triple du VDR réel.

Pour pallier cet inconvénient, on peut effectuer un filtrage préalable sur les valeurs de DVR successives reçues au cours des différents échantillonnages, en ne conservant que les valeurs produisant des sauts de fréquence supérieurs à une valeur fixée, inférieurs au double de l'écart moyen constaté sur les échantillons précédents. On peut par exemple filtrer les différents échantillons en refusant toutes les valeurs de DVR produisant des sauts relatifs supérieurs à 1,8 (ou une autre valeur proche, strictement inférieure à 2).

Par ailleurs, au cas où le nombre de raies reçu à un instant donné est insuffisant (inférieur à 2), on ne conserve pas l'échantillon et on maintient la valeur de DVR précédemment calculée, qui sera figée jusqu'au prochain échantillonnage.

Ayant ainsi déterminé un peigne de l'aies sensiblement stable, on recherche alors, parmi les cibles connues de la bibliothèque indiquée plus haut, celles qui ont la valeur DVR la plus proche. On a en effet constaté que les cibles connues ont un paramètre DVR qui varie toujours entre une valeur minimum et une valeur maximum de fréquence Doppler ; on détermine ainsi, parmi tous les peignes de référence, un nombre limité de peignes répondant à ce critère et donc susceptibles de correspondre à la cible.

On effectue alors, pour chacun des peignes de ce sous-ensemble, une intercorrélation entre le peigne de référence et le peigne du signal reçu, et on choisit finalement le peigne de référence présentant le degré d'intercorrélation le plus élevé.

Ce peigne correspondra alors à la catégorie de cible la plus probable. Bien entendu, on affectera le résultat présenté au pilote d'un facteur d'incertitude éventuel au cas où il ne serait pas possible de se décider avec une marge de sécurité suffisante entre plusieurs catégories de cibles.

Pour sa mise en oeuvre, l'invention ne nécessite, du point de vue matériel, qu'un équipement classique, à savoir un radar fonctionnant en mode Doppler et susceptible de fournir, outre la raie principale, des niveaux de raies par rapport au bruit thermique.

Le procédé est avantageusement mis en oeuvre par un logiciel analysant le spectre délivré sous forme numérique par les moyens d'échantillonnage du signal Doppler.

Par ailleurs, indépendamment du point de savoir à quel appareil on a affaire, la signature obtenue peut être analysée dans son évolution au cours du temps, pour déclencher éventuellement une alarme de contre-contremesures électroniques, car toute modification de la signature sans évolution cinématique particulière de la cible est révélatrice du déclenchement d'un brouilleur.

On pourra ainsi déterminer très aisément que l'on est en présence de contremesures électroniques et non d'une cible réelle.

De façon semblable, lorsque l'on fonctionne en mode PSID/PSIC, on peut utiliser la signature de la cible établie en PSID pour vérifier que, lors de la transition en PSIC, on a bien conservation de cette même signature ; en effet, une modification de celle-ci indiquerait qu'il y a eu, lors de la transition, transfert de la poursuite sur une autre cible, de type différent, située au voisinage de la première, et donc que la transition n'a pas été effectuée correctement, impliquant donc un retour au mode PSID.

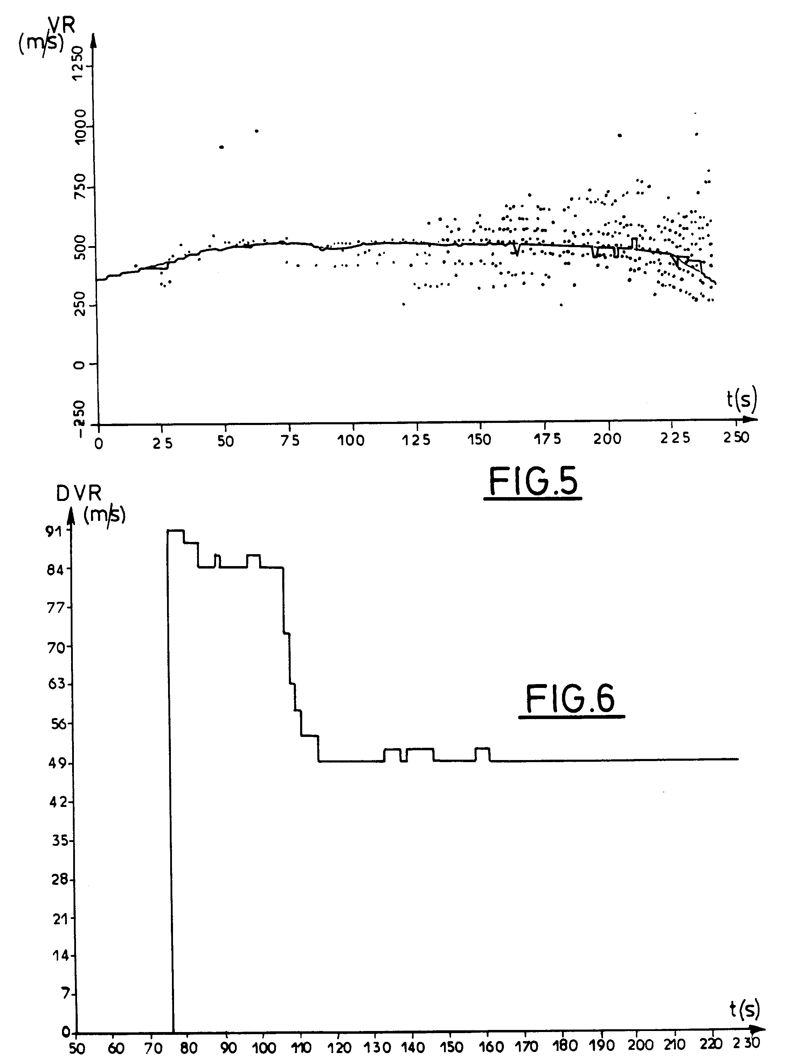

Les figures 5 et 6 montrent des exemples de résultats obtenus à partir d'enregistrements réels effectués en vol sur une cible, en l'espèce un appareil de type avion de ligne (Airbus).

La figure 5 montre l'évolution au cours du temps du spectre Doppler, chaque point correspondant, pour un instant donné, à une raie du spectre. La ligne continue correspond à la valeur lissée de la vitesse de la cible, indiquant la position de la raie principale du spectre.

On voit ainsi, sur cette figure, la formation progressive du peigne de raies, qui comporte ici un nombre important de raies secondaires, typiques d'un appareil multimoteur.

Au bout de 100 à 120 secondes, durée correspondant, dans cet exemple, à une distance de l'ordre d'une quarantaine de milles nautiques, on peut déjà obtenir une première estimation du type de cible, que l'on peut considérer ici avec une probabilité raisonnable comme étant un avion de ligne (pour un chasseur, dont le spectre est moins riche et moins intense, il faudrait attendre que l'appareil se rapproche plus).

Au bout d'une durée de l'ordre de 300 secondes, correspondant à une vingtaine de milles nautiques, le spectre obtenu est suffisamment riche et stable pour pouvoir confirmer la première estimation établie précédemment et rechercher de façon plus fine la catégorie de l'appareil auquel on a affaire. Cette distance peut d'ailleurs correspondre à une distance typique de transition PSID/PSIC (recherche/poursuite continue). Après transition en mode PSIC, le radar étant pointé sur la cible en permanence, on pourra acquérir le peigne de raies de la cible à des instants d'échantillonnage beaucoup plus rapprochés, typiquement toutes les deux secondes environ.

La figure 6 montre, quant à elle, l'évolution au cours du temps de l'écart DVR entre la raie principale et la raie secondaire du premier ordre du spectre de la figure 5.

On peut noter que, dans cet exemple, ce sont tout d'abord les raies du second ordre, et non les raies du premier ordre, qui sont apparues les premières, donnant ainsi, initialement, une valeur DVR double de la valeur finale (région de la courbe illustrée correspondant à l'intervalle 80-100 secondes environ).

Ce n'est que lorsque les raies secondaires apparaissent en plus grand nombre (aux alentours de 100 secondes) que l'on observe une convergence, d'ailleurs rapide, de la valeur calculée de DVR vers la valeur finale. On voit ainsi que l'on peut acquérir très rapidement ce paramètre qui, comme on l'a indiqué plus haut, est le paramètre le plus significatif pour déterminer la nature de la cible.

On notera en outre que, dans cet exemple, la valeur finale, stable, de DVR est obtenue au bout d'une durée de l'ordre de 120 secondes, correspondant à une distance de 40 milles nautiques: on assure ainsi une première identification de la cible à une distance bien inférieure à celle à laquelle on pourrait envisager une identification visuelle (et à supposer que les conditions de visibilité permettent une telle identification visuelle).

## Revendications

1. Procédé de reconnaissance d'une cible aérienne à partir d'échantillons d'échos radar renvoyés par la cible, l'écho étant l'écho d'un signal produit par une émission d'un radar Doppler, le procédé consistant à déterminer le spectre Doppler de la cible, ce spectre comportant une raie principale et des raies secondaires, pour classer la cible dans une catégorie prédéterminée de cible, caractérisé en ce que

    – on estime sur les échantillons successifs l'écart de fréquence entre la raie principale et les raies secondaires du spectre ;

    – on détermine la surface équivalente radar de la cible et à partir de ces valeurs on classe la cible dans une catégorie de cibles prédéterminée.

2. Procédé selon la revendication 1, caractérisé en ce que le classement de la cible est effectué à partir des deux valeurs de la revendication 1 et de la valeur d'un paramètre supplémentaire.

3. Procédé selon la revendication 1, caractérisé en ce que le paramètre supplémentaire est l'intensité des raies secondaires par rapport à la raie principale.

4. Procédé selon la revendication 1, caractérisé en ce que le paramètre supplémentaire est le nombre total de raie du spectre.

5. Procédé selon l'une des revendications 1 à 4, dans lequel on effectue en outre une corrélation entre le spectre de raies de la cible et chacun des spectres de raies contenus dans une mémoire contenant les spectres de la catégorie de cibles prédéterminées.

6. Procédé selon la revendication 1, caractérisé en ce que la détermination progressive de l'écart de fréquence entre la raie principale et les raies secondaires est effectuée en filtrant les écarts supérieurs à 1,8 fois l'écart obtenu précédemment.

7. Procédé selon la revendication 1, caractérisé en ce que l'étape (d) de détermination de l'écart (DVR) entre la raie centrale et la raie du premier ordre du peigne comprend une étape de filtrage des échantillons Doppler ne conservant les échantillons que lorsque le nombre de raies constaté est au moins égal à trois.

8. Procédé selon la revendication 1, comportant en outre une étape complémentaire de détection d'une déclassification de la cible et de déclenchement d'une alerte de contre contre mesure électronique si une déclassification a eu lieu.

9. Procédé selon la revendication 5, comportant en outre une étape complémentaire de détection d'une déclassification de la cible et de déclenchement d'une alerte de contre contre mesure électronique si une déclassification a eu lieu.

10. Procédé selon la revendication 1, dans lequel, le procédé étant mis en oeuvre au cours d'une procédure avec transition de poursuite sur information discontinue en poursuite sur information continue, on prévoit une étape complémentaire de comparaison des classifications de cible établies, respectivement, avant et après ladite transition, pour, au cas où cette comparaison révèle un changement de classification déclencher une alerte signalant un transfert de la poursuite sur une autre cible.

11. Procédé selon la revendication 5, dans lequel, le procédé étant mis en oeuvre au cours d'une procédure avec transition de poursuite sur information discontinue en poursuite sur information continue, on prévoit une étape complémentaire de comparaison des classifications de cible établies, respectivement, avant et après ladite transition, pour, au cas où cette comparaison révèle un changement de classification déclencher une alerte signalant un transfert de la poursuite sur une autre cible.

FIG.1

FIG.2

FIG.3

FIG.4

FIG.5

FIG.6

Office européen
des brevets

**RAPPORT DE RECHERCHE EUROPEENNE**

Numero de la demande

EP 91 40 2949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 054 310 (SIEMENS)<br>* Page 1, ligne 59 - page 2, ligne 11; figures * | 1 | G 01 S 7/02 |
| A | --- | 2-11 | |
| Y | A.G.A.R.D. CONFERENCE PROC ON NEW DEVICES, TECHNIQUES AND SYSTEMS IN RADAR O.T.A.N., Neuilly sur Seine, 1977, no. 197, pages 161-169; G. GRAF: "Radar cross section analysis and target imaging from the doppler information in the radar echo" * Pages 16-1,16-9 * | 1 | |
| A | GB-A-1 605 308 (S.T.C.)<br>* Page 1, ligne 94 - page 3, ligne 120; figures 3-5 * | 1-4 | |
| A | DE-A-3 002 148 (SIEMENS)<br>* Pages 7-9; figures * | 4 | |
| A | FR-A-2 193 983 (DASSAULT)<br>* Pages 3-8 * | 8-11 | **DOMAINES TECHNIQUES RECHERCHES (Int. Cl.5)**<br><br>G 01 S |
| A | US-A-4 707 697 (COULTER et al.)<br>* Colonnes 1-4 * | 10,11 | |
| A | FR-A-2 593 608 (THOMSON)<br>--- | 1 | |
| A | ICASSP'88, M, vol. II, MULTIDIMENSIONAL SIGNAL PROCESSING, New York, 11-14 avril 1984, pages 1212-1215, IEEE, New York, US; D.H. JOHNSON: "Application of the hough transform to doppler-time image processing" | | |

Le présent rapport a été établi pour toutes les revendications

| Lieu de la recherche | Date d'achèvement de la recherche | Examinateur |
|---|---|---|
| LA HAYE | 14-02-1992 | DEVINE J.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

            .................................................
& : membre de la même famille, document correspondant

EPO FORM 1503 03.82 (P0402)